# EUROPEAN PATENT SPECIFICATION

(11) **EP 3 799 235 B1**
(45) Date of publication and mention of the grant of the patent: **10.08.2022**
(21) Application number: 20197355.9
(22) Date of filing: 22.09.2020
(51) Int. Cl.: H02G 3/12, H02G 3/08

(54) **BEAM-FIXING MEMBER FOR AN ELECTRICAL INSTALLATION BOX**
TRÄGERBEFESTIGUNGSELEMENT FÜR EINE ELEKTRISCHE INSTALLATIONSDOSE
MEMBRE DE FIXATION DE POUTRE POUR UN BOÎTIER D'INSTALLATION ÉLECTRIQUE

(30) Priority: 24.09.2019 IN 201931038529
(43) Date of publication of application: 31.03.2021
(73) Proprietor: Schneider Electric Industries SAS, 92500 Rueil-Malmaison (FR)
(72) Inventor: ANANT NAYAK, Gireesh, 560067 Bangalore Karnataka (IN); CHIKKANNA, Manohar, 560073 Bangalore Karna (IN); VICKTORIUS, Richard, 50733 Köln (DE); NARAYANAN, Shree Ganesh, 51647 Gummersbach (DE)
(74) Representative: Swea IP Law AB

(56) References cited:
- EP-A1- 1 050 940
- EP-A1- 2 903 110
- US-A- 3 977 640
- US-A- 5 263 676

## Description

### Field of invention

The present invention relates to a mounting means for an installation member, more specifically the invention relates to a beam-fixing member for an electrical installation box. The invention leads to flush mounting of the installation box on a wall rigidly fixed on a beam.

### Background of the invention

Electrical outlet boxes are used in residential and commercial construction to house wire termination devices such as electrical switches and receptacles. The box encloses the termination of the wires to the termination devices. Electrical outlet boxes are secured to wall studs which are covered with wall board or other wall material. The outlet box is positioned such that the open front face of the outlet box lies flush with respect to the surface of the wall board placed over the stud.

Beam is supportive structure of a hollow wall. Box is mounted in the concrete walls or Plaster of Paris (POP) or wooden walls on these beams. POP walls are generally provided with wooden or metal beam. Box is mounted on the beam by the help of the beam fixing. Fixing frame or a structural part mounted on the box. Wire is drawn from the box and connect to the different electrical inserts, electrical module etc. In case of concrete electrical installation box is mounted inside the concrete after concrete treatment like painting wall papers wall irregularities and putty thickness impacting on the installation systems. When construction of the wall of any kind takes place, the variation in the thickness of the wall is bound to happen.

Due to variations in the thickness of commercially available wall board, it is often necessary to adjust the position of the box once it is installed on the stud to assure that the open front face of the box lies flush with the wall board. Various securement techniques have been developed to adjustably position the box with respect to the stud so as to accommodate variations in wall board thicknesses.

It is known in the art to use a bracket attached to a stud which allows discrete positioning of the outlet box with respect to the face of the wall board mounted there-over. Also an adjustable box mounting assembly can be provided where a multi-component bracket allows the slidable positioning of the box. These techniques are applied for adjustably mounting an outlet box to a stud where the adjustability is provided by way of screw adjustment. It is also know to employ a multi-component clip for adjustably positioning an outlet box with respect to a wall stud.

While each of these devices provide for the adequate adjustment of the outlet box with respect to the wall stud to assure that the open front face of the box lies flush with the wall board applied there-over, each of these devices are cumbersome to assemble and use in the field.

Installation boxes for mounting in a hollow wall are known in the art. Prior documents disclose an installation box, suitable for fitting in a hole in a hollow wall. The installation box comprises a bottom and a wall, which define a space suitable for allowing material of an electrical installation to be fitted therein. The bottom comprises first and second bottom portions and the wall comprise first and second wall portions. A nozzle extends from an outer side of the second wall portion, which nozzle is suitable for allowing a tube of the electrical installation to be inserted therein. The first and second wall portions, at a distance from the bottom, are integrated via a hinged portion having an axis parallel to the bottom, so that the second bottom portion and the second wall portion with the nozzle form a nozzle part which is pivotable relative to the rest of the box. Brackets for mounting of electrical equipment are disclosed in US5263676A, EP1050940A1 and EP2903110A1.

Unfortunately, problem arises when a part of the back support frame supporting the front wall board of the hollow wall lies close to, adjacent, or even across or partly across the wall opening for mounting the installation box, in particular such that the passage in the side wall of the installation box for placing the sprout part is effectively blocked by said part of the frame, or such that a tube running from a sprout of the sprout part cannot lie against the back side of the front wall board of the hollow wall. This would make a proper placement of the sprout part in the passage of the installation box, and consequently use of such an installation box, impossible.

Therefore, current beam-fixing is not compatible for flush mounting systems. At the time of installation, while cutting a hole in the wall, the cutter may touch to the metallic beam-fixing and that might wear out both the cutter and the beam-fixing member. Some of the problems associated with the current-beam fixing when used for flush mounting, includes:
- unavailability of modularity of electrical installation boxes with robust beam fixing,
- no strong beam-fixing solution with common box features,
- no adjustability in similar architecture without disturbing stubs of the electrical installation box,
- no adjustability without removal of beam fixing part from the box,
- no feature of easy mounting with common guide way with hook members for ease of mounting,
- electrical installation box slips out from beam while fixing when it pushed by cables in existing solutions,

With a view therefore to overcome the drawbacks and complications in the existing beam-fixing members, the inventors felt the need to develop a novel beam-fixing member for electrical installation box. This novel invention provides a unique approach to address the issues with conventional beam-fixing member optimizing components used in the current installation process. The beam-fixing member is at least provided with lug member, hook members, screw reliefs, and at least one deflection-arrest member functioning in a unique way to achieve flush mounting on a beam inside a wall.

### Summary of the invention

The invention provides a beam-fixing member for mounting an electrical installation box on a support, according to claim 1.

According to one embodiment of the invented beam-fixing member, said deflection arrest members are configured to prevent the electrical installation box from deflection against push and pull forces in a horizontal direction.

According to another embodiment of the invented beam-fixing member, said deflection arrest members are configured to prevent the electrical installation box from deflection against push and pull forces in a vertical direction.

According to one object of the invention, a first surface of said connecting member provides a dimensional gap defining a cutter relief to accommodate a cutter while creating a hole in the wall for inserting said installation box.

According to another object of the invention, said cutter relief is adopted to commensurate with the dimension of mounting edge of the rigid support on which said electrical installation box is mounted, providing a relief space for the cutter to be operated.

According to one further object of the invention, a second surface of said connecting member provides resting surface for assembling a support member with said installation box, said support member being snapped into snap receiving holes on said resting surface.

According to one preferred embodiment of the invention, said hook members are unidirectional and configured to slidably fix with said electrical installation box and thereby aligning said lug members with said mating portion of the electrical installation box.

According to one preferred embodiment of the invented beam-fixing member, said unidirectional hook members are provided with linear installation grooves in the inner surface for mounting on said installation box with slidable fixation.

According to yet another object of the invention, said second mating surface of said beam-fixing member is provided with mounting screw reliefs for accommodating and protecting the threaded area of mechanical fasteners of multiple dimension for onsite installation.

According to one preferred embodiment of the invention, said screw reliefs have linear profile for adjusting the position of said beam fixing member without removal of embedded mechanical fasteners.

In one embodiment of the invented beam-fixing member, said beam-fixing member is attached with the installation box such that multiple installation boxes can be ganged together along with board-fixing member and said support member to fix with a wall board for additional support.

According to one object of the invention, said beam-fixing member is provided with mounting holes at joining edge of said first mating surface and said connecting member accommodating linear snaps to attach with the electrical installation box.

According to a further object of the invention, said joining edge of the first mating surface and said connecting member is provided with at least one hole, defining a screw relief to facilitate screw movement and protection thereof.

### Brief description of Drawings

Embodiments of the invention will now be described with reference to the accompanying drawings in which
Figure 1 depicts a perspective view of a typical electrical installation box along with the invented beam-fixing member to be attached according one preferred embodiment of the invention.
Figures 2(a) and 2(b) depict frontside and backside perspective view respectively of the invented beam-fixing member attached with a typical electrical installation box according one preferred embodiment of the invention.
Figures 3(a) and 3(b) depict frontside and backside perspective view respectively of the invented beam-fixing member attached with a typical electrical installation box and mounted on a beam according one preferred embodiment of the invention.
Figures 4(a) and 4(b) depict frontside and backside perspective view respectively of two similar electrical installation boxes docked together and mounted horizontally on a beam with the invented beam-fixing member.
Figures 5(a) and 5(b) depict frontside and backside perspective view respectively of two similar electrical installation boxes docked together and mounted vertically on a beam with the invented beam-fixing member.
Figures 6(a) and 6(b) depict perspective view of the invented beam-fixing member showing the inventive components according one preferred embodiment of the invention.
Figures 6(c) and 6(d) depict perspective view of the invented beam-fixing member showing the inventive components according another preferred embodiment of the invention.
Figure 7 illustrates the direction of mounting of the beam-fixing member support member with the electrical installation box.
Figure 8 depicts a top view of the electrical installation box with the support member and the invented beam fixing member according to one embodiment of the invention.
Figures 9(a) and 9(b) depict frontside and backside perspective view respectively of two similar electrical installation boxes docked together and mounted horizontally on multiple beams with the invented beam-fixing member and single board-fixing member.
Figure 10 depicts a top view of two electrical installation boxes docked together and mounted horizontally with multiple beams by means of the invented beam-fixing member along a single board-fixing member according to one embodiment of the invention.
Figure 11 depicts a top view of two electrical installation boxes docked together and mounted horizontally with multiple beams by means of the invented beam fixing member along a double board-fixing members according to one embodiment of the invention.

### Detailed description of the drawings

For flush mounting, cover frames should protrude less than 3mm without changing the existing insert. To satisfy this condition, installer needs to take complete mounting position of the electrical installation box down. Therefore, larger cutter is used to cut a deeper hole inside the wall to mount the box on a beam, which is used to mount the wiring devices. Also, cutter should not hit to the beam fixing; so relief needs to be provided to avoid cut and damages and other installation problems. In the flush mounting also, mounting process is same like existing installation system.

The invention takes care of maximum possible variations of the beam-fixing member with the change of construction. For flush mounting a support member is also provided with quick fix system and mounting mechanism to the wall. In case of hollow walls box is mounted to the POP wall, wooden walls from the back side by using glue, screws, nails, and board-fixing member etc. Single board multi board, different dimensions of the beams, wallpapers, tiles to resists water are used in general installation system. In all these cases the surface of the electrical installation box has be in the outer most level to mount wiring devices.

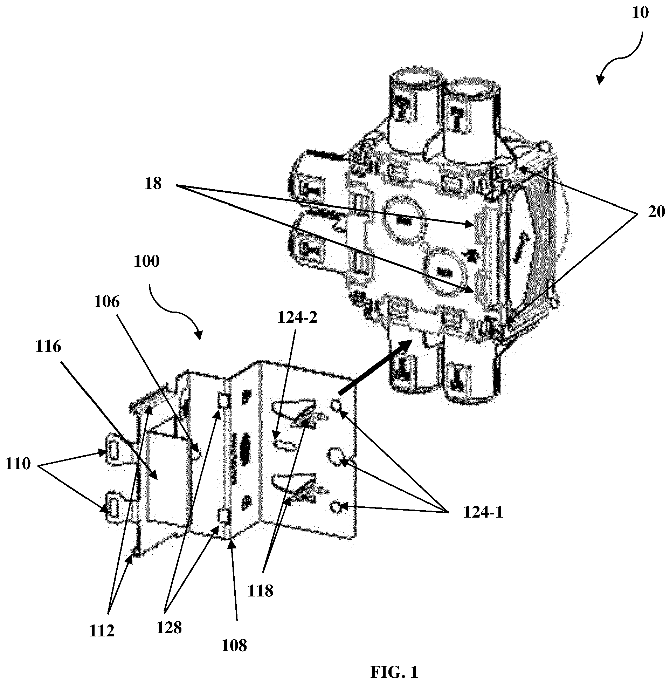

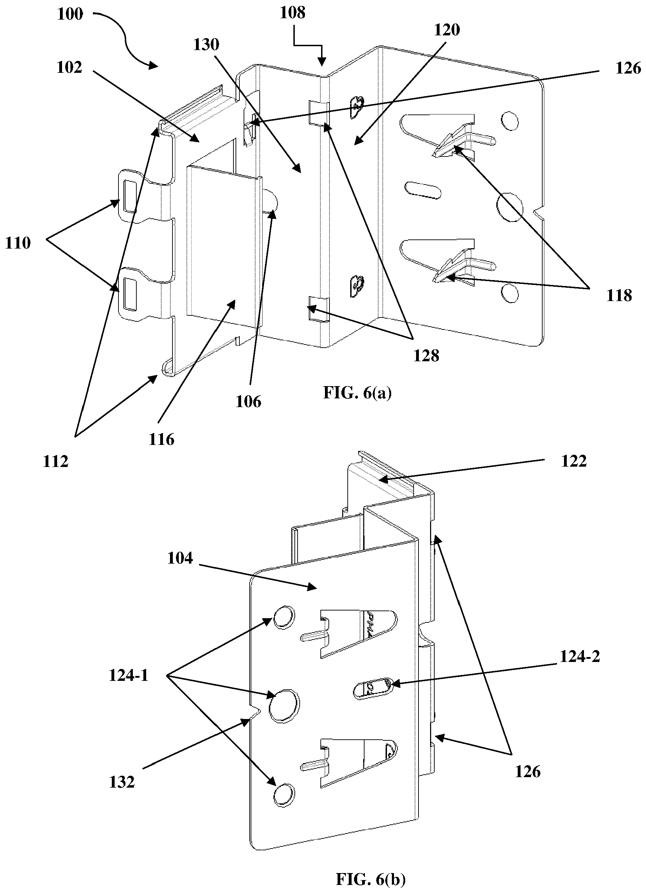

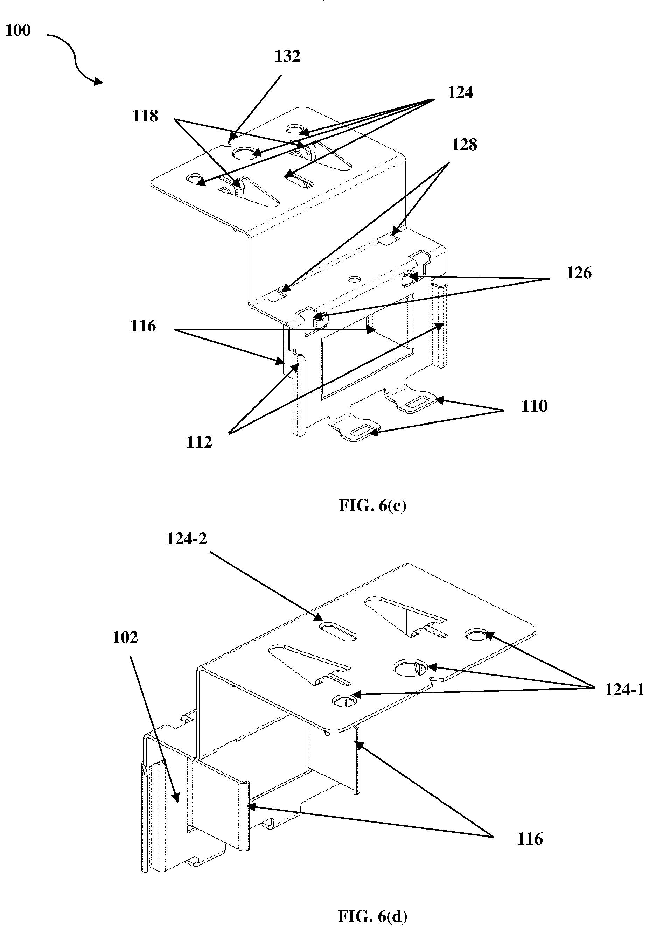

With reference to figures 1, 6(a) and 6(d) of the accompanying drawings, the present invention provides a beam-fixing member (100) for mounting an electrical installation box (10) on a rigid support (12) such as a beam (12) of a wall. The beam-fixing member (100) comprises a first mating surface (102) and a second mating surface (104). The first mating surface (102) is constructed so as to removably attach with said electrical installation box (10). The second mating surface (104) on the other hand is constructed so as to fixedly attach with the beam (12) of the wall. Therefore, the electrical installation box (10) in mounted on the beam being attached with the first mating surface (102) and the second mating surface (104) with the beam (12). The first and second mating surfaces (102,104) are within a continuous structural part such that they are joined together by a connecting member (108). The connecting member (108) is such shaped that it commensurate with the shape and dimension of the beam (12), which has a rectangular cross section and the connecting member (108) is substantially L-shaped. If the beam has a circular cross section, the connecting member (108) would have a semi-circular shape (neither shown, nor claimed). It will be apparent to construct various shape of connecting member (108) for any person skilled in the art, however these constructions are not claimed.

The first mating surface (102) of the beam-fixing member (100) comprises plurality of lug members (110), plurality of hook members (112), and at least one deflection-arrest member (116). Preferably, the lug members (110) are protruding in a perpendicular direction with said first mating surface (102) and are disposed in a spaced apart manner. The joining edge of said first mating surface (102) and said connecting member (108) is configured to removably attach said beam-fixing member (100) with corresponding edge of said electrical installation box (10). As shown in figures 1 and 6(a), two lug members (110) are provided in said beam-fixing member (100). The lug members (110) are attached to a mating portion (18) of said installation box (10). The spacing between said lug members (110) is determined based upon the electrical installation box (10) with which the beam-fixing is to be attached. These lug members (110) improves the robustness of installation of the electrical installation box (10).

The hook members (112) are disposed over the two opposite edges of said first mating surface (102) of the beam-fixing member (100). These hook members (112) are constructed in such a way that they have a actuate profile and robust in nature. The curvature of these hook members (112) are adjusted to match with guide way (20) of the electrical installation box (10). Thus these hook members (112) removably attach with said electrical installation box (10).

Preferably, these hook members (112) are unidirectional and configured to slidably fix with said installation box (10). Typical electrical installation boxes are provided with guide ways (20) which have linear grooves on its surface. Hook members (112) are attached with the guide ways (20) by sliding fixation and thereby aligning said lug members (110) with said mating portion (18) of the electrical installation box (10). The inner peripheral surface of the unidirectional hook members (112) attach with the guide ways (20) of the installation box (10). Linear installation grooves (122) are provided in an alternative manner at the inner surface for mounting on said installation box (10) with slidable fixation. Additionally these hook members (112) allow the beam-fixing member (100) to be attached to multiple variants of ganged boxes (10) and any directional mounting of individual boxes (10) with these groove installation (122).

The joining edge of said first mating surface (102) and said connecting member (108) is provided with at least a hole (106), defining screw relief portion at joining edge of said first mating surface (102) and said connecting member (108). The hole is such disposed that it can be seen as two semicircular holes one constructed at an edge of said first mating surface (102) and another at one distal edge of the connecting member (108). This screw relief (106) provides an additional an unconventional screwing provision which is required for various remote installation conditions. Screw relief (106) facilitates screw movement and protection thereof. Instead of screws, nailing members can also be penetrated through the screw relief (106) inside the beam (12). The head of the nailing or screwing member rests on the peripheral surface of the screw relief (106). This joining edge is also provided with mounting holes (126) with snaps disposed therein. These snaps in the mounting holes (126) are configured to removably attach with the electrical installation box (10) and also disengaged with ease.

As seen in figures 1 and 6(a) of the accompanying drawings, one deflection-arrest member (116) extends from said first mating surface (102) in an outwardly manner. This deflection-arrest member (116) is placed in contact with the beam (12) to support said installation box (10) against external forces. For easy and smooth contact with the surface of the beam the distal edge of the deflection-arrest member (116) is kept substantially flat. The sides of the rectangular shape of said deflection-arrest member (116) can be varied according to the load intended to be applied on the electrical installation box (10). By changing the rectangular shape of the deflection-arrest member (116) the amount of deflection can be prevented accordingly, which should be apparent from general interpretation. For ease of installation, the deflection-arrest member (116) is placed substantially normal to the mounting surface of the beam (12), which makes the box aligned with the beam (12).

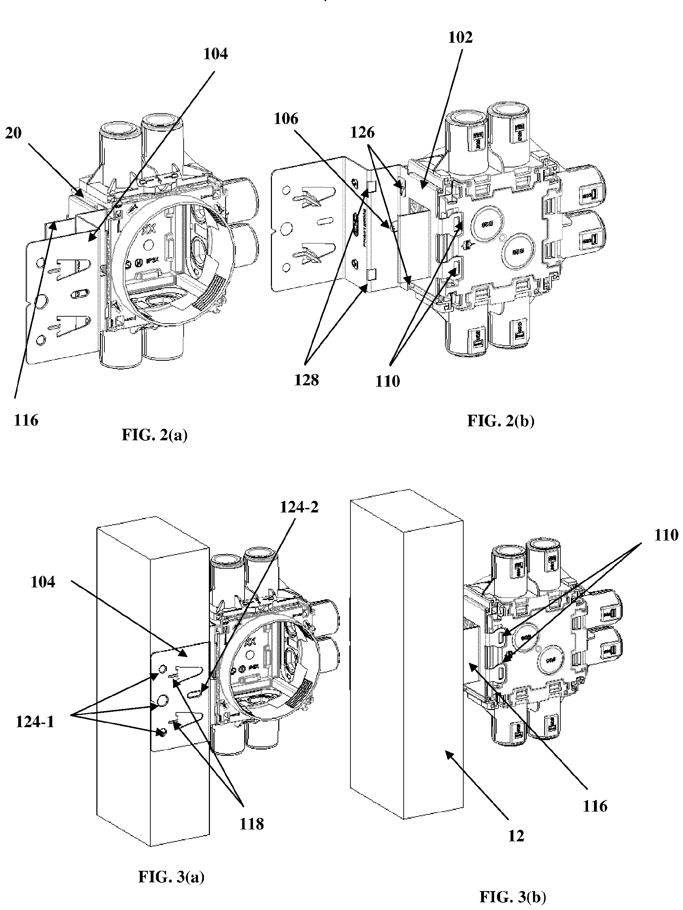

As mention earlier and shown in figures 3(a) and 3(b) of the accompanying drawings, second mating surface (104) is mounted on the rigid member (12) i.e. the beam. The second mating surface (104) is to be rigidly fixed so that the alignment of the electrical installation box (10) does not get affected. Plurality of self-nailing members (118) provided on said second mating surface (104) for robust fixation of said installation box (10) on the beam (12). The self-nailing members (118) protrude outwardly from the second mating surface (104). The thickness of self-nailing members (118) decreases from the base to the tip. This innovative arrow head shaped construction makes the penetration into the beam (12) easy. Additionally, this arrow head shape helps to improve holding of nails inside the beam firmly because of the cuts provided at the edges of either side of self-nailing members (118). An additional marking notch (132) is provided on a distal edge of the second mating surface (104) for ease aligning the electrical installation box (10).

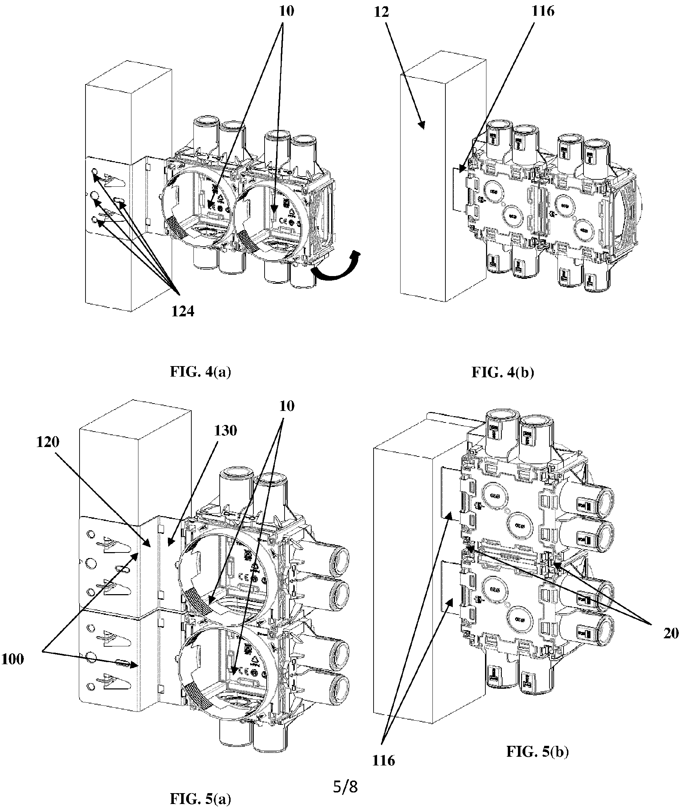

Figures 6(a) and 6(d) depict two different embodiment of the invented beam-fixing member (100). In figure 6(a) the beam-fixing member (100) is provided with a single deflection-arrest member (116). The deflection arrest member extended from the first mating surface (102) of beam-fixing member (100) in a parallel direction to the second mating surface (104). Therefore the breadth of the deflection-arrest member (116) is vertical (figures 3(b) and 4(b)). It is apparent from the drawing that, in this configuration, the deflection of the installation box (10) along the horizontal line is prevented. Even if there is a heavy weight of the electrical inserts or the installation forces e.g. push or pull forces on the conduits, the installation box (10) would not bend or deflect in the horizontal direction.

Again, in the embodiment as shown in figure 6(d), the beam-fixing member (100) is provided with a pair of deflection-arrest members (116) on either side of the first mating surface (102) of beam-fixing member (100). The pair of deflection-arrest members (116) protrudes parallel to each other and the planer surface of the deflection-arrest members (116) being perpendicular to the second mating surface (104). It can be anticipated that when these deflection-arrest members (116) come in contact with the beam, the breadth of the deflection-arrest member (116) is extended along horizontal direction (not shown). Therefore, in this configuration, the deflection of the box along the vertical line is prevented. Even if there is a heavy weight of the electrical inserts or the installation forces e.g. push or pull forces on the conduits, the installation box (10) would not bend or deflect in the vertical direction.

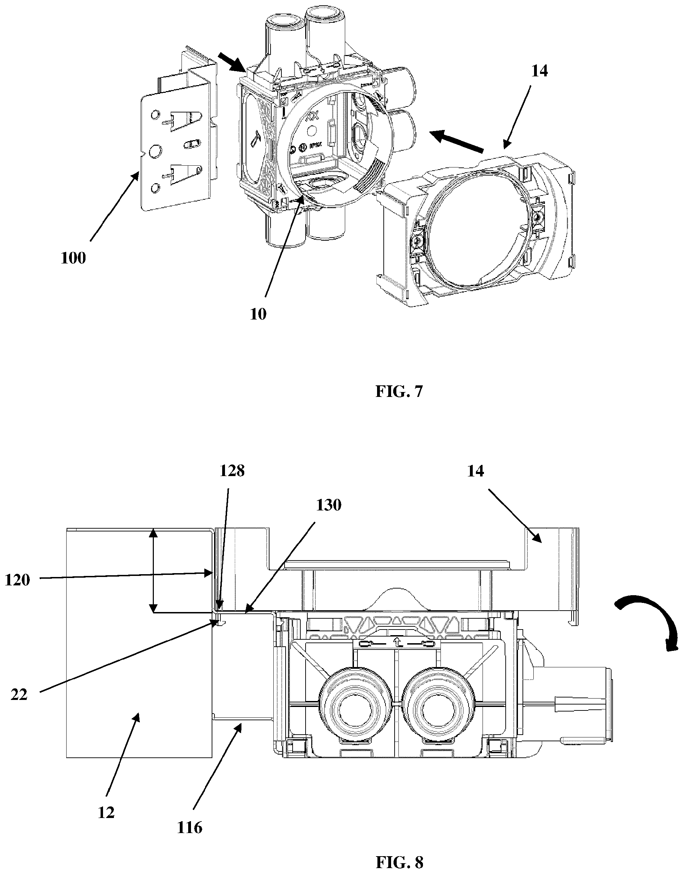

As shown in figure 7 of the accompanying drawings, for flush mounting, a support member (14) has to be attached with the electrical installation box (10) along with the beam-fixing member (100). The support member (14) is mounted on the front part of the installation box (10). Now, a surface of said connecting member (108), which is adjoining to the first mating surface (102) of the beam-fixing member (100) provides resting surface (130) for assembling a support member (14) with said installation box (10). Extend of this surface (130) is to be adopted with the dimension of the support member (14) which again depends on the application of the installation box (10). This configuration also illustrate that the horizontal deflect of the installation box (10) is arrested. A typical support member (14) is provided with locking snaps (22) to be attached with its adjoining member. One distal edge of said surface (130) is provided with receiving holes (128) for the linear snaps (22) of the support member (14) to be snapped therein. This is illustrated in figure 8.

Another surface (120) of said connecting member (108), which is adjoining to the second mating surface (104) of the beam-fixing member (100), provides a dimensional gap defining a cutter relief (120). As mentioned earlier, for flush mounting, the electrical installation box (10) has to be inserted into the wall and for that cutter has to be used. To prevent any damage to the cutter to the beam-fixing member (100), the cutter relief (120) accommodates a cutter while creating a hole in the wall for inserting said installation box (10). The dimension of cutter relief (120) is adopted to commensurate with the dimension of mounting edge of the beam (12) on which said electrical installation box (10) is mounted, providing a relief space (120) for the cutter to be operated. This has been illustrated in figure 8 of the accompanying drawings.

With reference to figures 3(a), 4(a) and 6(b) of the accompanying drawings, the second mating surface (104) of said beam-fixing member (100) is provided with plurality mounting holes (124) defining screw reliefs for accommodating screwing or nailing elements. These screw reliefs (124) protect the threaded area of mechanical fasteners of multiple dimensions for onsite installation. As seen in the figures, the screw reliefs (124) consist of at least two types of profiles. One is the conventional circular profile (124-1); other type of hole has linear profile (124-2 ). In the installation site, a single board, double boards of even three boards and tiles can be used. To mount the installation box (10), different types of mechanical fasteners are used. The diameter of the circular holes (124-1) can be varied in order to accommodate mechanical fasteners of different dimension. The screw relief (124-2) with linear prolife is used to align the electrical installation box (10) even when a mechanical fastener is inserted there.

In different installation sites, electrical installation boxes (10) need to be docked with each other to create a larger cavity inside the box to accommodate larger electrical inserts, devices, wires, conduits etc. As shown in figures 4(a) to 5(b), as per the requirement, electrical installation boxes (10) can be docked in a side-by-side configuration of docked one on top of another. In the first configuration as shown in figure 4(a) and 4(b) the load across the horizontal line increases considerably with respect to a single box installation. When in the second configuration as shown in figure 5(a) and 5(b) then the load across the vertical line increases considerably with respect to a single box installation. The invented beam-fixing member (100) can be mounted in both the configurations of docking. When the horizontal load increases the deflection-arrest member (116) as shown in figure 6(a) supports the load of the electrical installation box (10) along with devices inside the box and thereby prevents any bending of the electrical installation box (10). When the horizontal load increases, as depicted in figure 5(a), each of the boxes can be provided with separate beam-fixing members (100) and with the deflection-arrest members (116) provided therein. As an alternative, the second configuration of the beam-fixing member (100) as seen in figure 6(d) can be used. Therefore even when the beam-fixing member (100) is attached with the installation box (10), multiple installation boxes (10) can be ganged together to achieve modularity along with board-fixing member (16) and said support member (14) can be fix with a wall board for additional support.

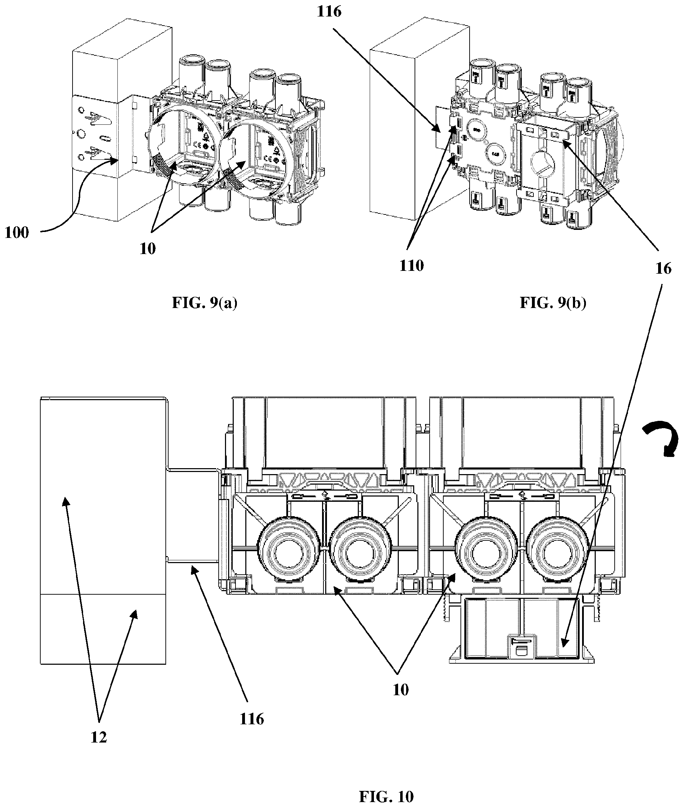

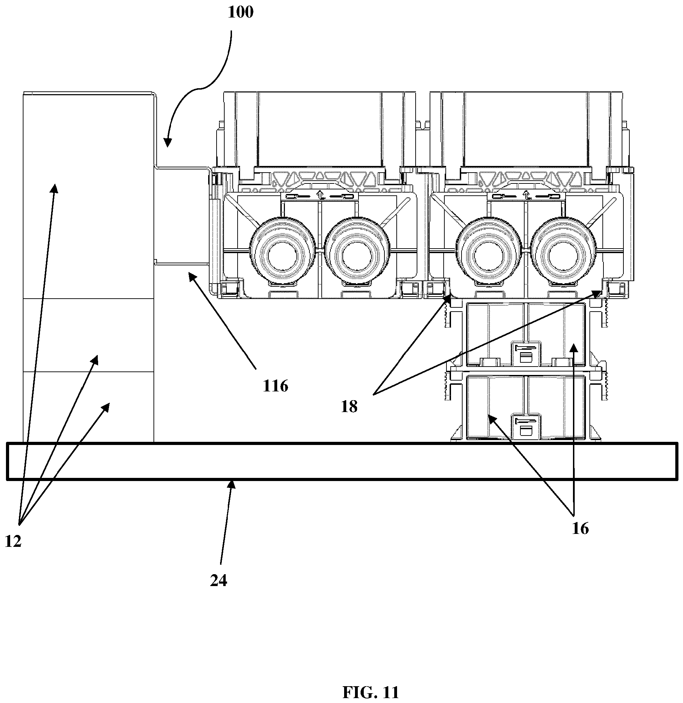

Board-fixing members (16) are attached with the electrical installation box (10) at the installation sites when multiple beams (12) are used and installation box (10) does not get enough support from the beam (12) only as shown in figures 10 and 11. For providing additional support, one surface of the board-fixing member (16) is supported by a plane rigid member such as board (24) inside a wall. As mention earlier, the lug members (110) of the beam-fixing in attached to a mating portion (18) of the installation box (10). The mating portion (18) is situated at on distal edge of the back-side of the electrical installation box (10) therefore, the beam-fixing member (100) provides enough mounting space for the board-fixing members (16) to be attached. With reference to figures 9(a) and 9(b), even when two of the identical electrical installation boxes (10) are docked together board-fixing members (16) can be attached to either of the boxes and thereby take care of the dimensional variation due to the used of two beams or three beams and so on. The deflection-arrest members (116) of the beam-fixing member (100) provides robust support to the load due to the additional board-fixing members (16) and keep the surface of the installation box (10) aligned to the surface of the wall and achieve flush mounting of the electrical installation box (10).

As already mentioned, the foregoing description is illustrative of the invention and not limitative to its scope, because it will be apparent to persons skilled in the art to device other alternatives embodiments without departing from the broad ambit of the disclosures made herein.

## Claims

1. A beam-fixing member (100) for mounting an electrical installation box (10) on a support (12), said beam-fixing member (100) comprising:
- a first mating surface (102) to removably attach with said electrical installation box (10), and
- a second mating surface (104) fixedly attachable with the support (12), said first mating surface (102) and second mating surface (104) are joined by a connecting member (108), wherein said first mating surface (102) comprises:
- lug members (110), extending from said first mating surface (102) to attach fixedly with a mating portion (18) of said electrical installation box (10);
- at least a hook member (112), disposed along an edge of said first mating surface (102) to removably attach with said electrical installation box (10);
- a joining edge of said first mating surface (102) and said connecting member (108), configured to removably attach said beam-fixing member (100) with corresponding edge of said electrical installation box (10); and
- at least one deflection-arrest member (116), protruding outwardly perpendicular to the first mating surface (102) of said beam-fixing member (100) and adapted to be placed in contact with the support (12) to support said installation box against external forces,
and wherein said second mating surface (104) comprises self-nailing members (118) for fixation of said installation box on the surface (12), said self-nailing member (118) being arrow head shaped for easy penetration into the support, wherein
the connecting member (108) has an L-shape shape having a first surface (120) from which the second mating surface (104) extends perpendicularly and a second surface (130) from which the first mating surface (102) extends perpendicularly, and
whereby the joining edge of said first mating surface (102) and said connecting member (108) is provided with at least a hole (106) defining screw relief portion at the joining edge and mounting holes (126) with linear snaps disposed therein to removably attach with the electrical installation box (10).

2. The beam-fixing member (100) for mounting an electrical installation box (10) as claimed in claim 1, wherein the at least a hole (106) comprises two semicircular holes, one hole constructed at an edge of said first mating surface (102) and another hole at one distal edge of the connecting member (108).

3. The beam-fixing member (100) for mounting an electrical installation box (10) as claimed in claim 1, wherein sides of a rectangular shape of said deflection-arrest member (116) can be varied according to the load intended to be applied on the electrical installation box (10).

4. The beam-fixing member (100) for mounting an electrical installation box (10) as claimed in any of the above claims 1 to 3, comprising a single deflection-arrest member (116) extending from the first mating surface (102) of beam-fixing member (100) in a parallel direction to the second mating surface (104).

5. The beam-fixing member (100) for mounting an electrical installation box (10) as claimed in claim 4, comprising a pair of deflection-arrest members (116) on either side of the first mating surface (102) of beam-fixing member (100) parallel to each other and a planer surface of the deflection-arrest members (116) being perpendicular to the second mating surface (104).

6. The beam-fixing member (100) for mounting an electrical installation box (10) as claimed in any of the above claims 1 to 5, wherein the second surface (130) of said connecting member (108) is provided with snap receiving holes (128) adapted to be snapped with a linear snaps (22) of a support member (14) attached to the electrical installation box (10).

7. The beam-fixing member (100) for mounting an electrical installation box (10) as claimed in any of the above claims 1 to 6, wherein said hook members (112) are unidirectional and configured to slidably fix with said electrical installation box (10) and thereby aligning said lug members (110) with said mating portion (18) of the electrical installation box (10).

8. The beam-fixing member (100) for mounting an electrical installation box (10) as claimed in claim 7, wherein said unidirectional hook members (112) are provided with linear installation grooves (122) in the inner surface for mounting on said installation box (10) with slidable fixation.

9. The beam-fixing member (100) for mounting an electrical installation box (10) as claimed in any of the above claims 1 to 8, wherein said second mating surface (104) of said beam-fixing member (100) is provided with mounting screw reliefs (124) for accommodating and protecting the threaded area of mechanical fasteners of multiple dimension for onsite installation.

10. The beam-fixing member (100) for mounting an electrical installation box (10) as claimed in claim 9, wherein the screw reliefs (124) consist of at least two types of profiles, one a circular profile (124-1) and another a linear profile (124-2).

## Patentansprüche

1. Trägerbefestigungselement (100) zum Montieren einer elektrischen Installationsdose (10) an einer Stütze (12), wobei das Trägerbefestigungselement (100) umfasst:
- eine erste Passfläche (102) zum entfernbaren Anbringen an der elektrischen Installationsdose (10) und
- eine zweite Passfläche (104), die fest an der Stütze (12) anbringbar ist, wobei die erste Passfläche (102) und die zweite Passfläche (104) durch ein Verbindungselement (108) verbunden sind,
wobei die erste Passfläche (102) umfasst:
- Laschenelemente (110), die sich von der ersten Passfläche (102) erstrecken, zum festen Anbringen an einem Passabschnitt (18) der elektrischen Installationsdose (10);
- mindestens ein Hakenelement (112), das entlang einer Kante der ersten Passfläche (102) angeordnet ist, zum entfernbaren Anbringen an der elektrischen Installationsdose (10);
- eine Verbindungskante der ersten Passfläche (102) und des Verbindungselements (108), die zum entfernbaren Anbringen des Trägerbefestigungselements (100) an einer entsprechenden Kante der elektrischen Installationsdose (10) konfiguriert ist; und
- mindestens ein Biegehemmelement (116), das senkrecht zu der ersten Passfläche (102) des Trägerbefestigungselements (100) nach außen vorsteht und zum Platzieren in Kontakt mit der Stütze (12) angepasst ist, um die Installationsdose gegen äußere Kräfte zu stützen,
und wobei die zweite Passfläche (104) selbstnagelnde Elemente (118) zur Befestigung der Installationsdose an der Oberfläche (12) umfasst, wobei das selbstnagelnde Element (118) zur einfachen Eindringung in die Stütze pfeilkopfförmig ist, wobei
das Verbindungselement (108) eine L-Form mit einer ersten Oberfläche (120), von der sich die zweite Passfläche (104) senkrecht erstreckt, und einer zweiten Oberfläche (130), von der sich die erste Passfläche (102) senkrecht erstreckt, aufweist, und
wobei die Verbindungskante der ersten Passfläche (102) und des Verbindungselements (108) mit mindestens einem Loch (106), das einen Schraubentlastungsabschnitt an der Verbindungskante definiert, und Montagelöchern (126) mit darin angeordneten linearen Schnappverschlüssen zum entfernbaren Anbringen an der elektrischen Installationsdose (10) versehen ist.

2. Trägerbefestigungselement (100) zum Montieren einer elektrischen Installationsdose (10) nach Anspruch 1, wobei das mindestens eine Loch (106) zwei halbkreisförmige Löcher umfasst, wobei ein Loch an einer Kante der ersten Passfläche (102) und ein anderes Loch an einer distalen Kante des Verbindungselements (108) ausgebildet ist.

3. Trägerbefestigungselement (100) zum Montieren einer elektrischen Installationsdose (10) nach Anspruch 1, wobei Seiten einer rechteckigen Form des Biegehemmelements (116) gemäß der Last variiert werden können, die an die elektrische Installationsdose (10) angelegt werden soll.

4. Trägerbefestigungselement (100) zum Montieren einer elektrischen Installationsdose (10) nach einem der vorstehenden Ansprüche 1 bis 3, umfassend ein einzelnes Biegehemmelement (116), das sich von der ersten Passfläche (102) des Trägerbefestigungselements (100) in einer parallelen Richtung zu der zweiten Passfläche (104) erstreckt.

5. Trägerbefestigungselement (100) zum Montieren einer elektrischen Installationsdose (10) nach Anspruch 4, umfassend ein Paar Biegehemmelemente (116) auf beiden Seiten der ersten Passfläche (102) des Trägerbefestigungselements (100) parallel zueinander und eine Planeroberfläche der Biegehemmelemente (116), die senkrecht zu der zweiten Passfläche (104) ist.

6. Trägerbefestigungselement (100) zum Montieren einer elektrischen Installationsdose (10) nach einem der vorstehenden Ansprüche 1 bis 5, wobei die zweite Oberfläche (130) des Verbindungselements (108) mit Schnappaufnahmelöchern (128) versehen ist, die zur Schnappverbindung mit einem linearen Schnappverschlüssen (22) eines Stützelements (14), das an der elektrischen Installationsdose (10) angebracht ist, angepasst sind.

7. Trägerbefestigungselement (100) zum Montieren einer elektrischen Installationsdose (10) nach einem der vorstehenden Ansprüche 1 bis 6, wobei die Hakenelemente (112) unidirektional und zum gleitenden Befestigen an der elektrischen Installationsdose (10) und dadurch zum Ausrichten der Laschenelemente (110) an dem Passabschnitt (18) der elektrischen Installationsdose (10) konfiguriert sind.

8. Trägerbefestigungselement (100) zum Montieren einer elektrischen Installationsdose (10) nach Anspruch 7, wobei die unidirektionalen Hakenelemente (112) mit linearen Installationsnuten (122) in der Innenoberfläche zum Montieren an der Installationsdose (10) mit gleitbarer Befestigung versehen sind.

9. Trägerbefestigungselement (100) zum Montieren einer elektrischen Installationsdose (10) nach einem der vorstehenden Ansprüche 1 bis 8, wobei die zweite Passfläche (104) des Trägerbefestigungselements (100) mit Montageschraubentlastungen (124) zum Aufnehmen und Schützen des Gewindebereichs mechanischer Befestigungselemente mehrerer Abmessungen zur Installation vor Ort versehen ist.

10. Trägerbefestigungselement (100) zum Montieren einer elektrischen Installationsdose (10) nach Anspruch 9, wobei die Schraubentlastungen (124) aus mindestens zwei Typen von Profilen, einem kreisförmigen Profil (124-1) und einem anderen linearen Profil (124-2), bestehen.

## Revendications

1. Élément de fixation sur poutre (100) pour le montage d'un boîtier d'installation électrique (10) sur un support (12), ledit élément de fixation sur poutre (100) comprenant :
- une première surface d'accouplement (102) à attacher de manière amovible avec ledit boîtier d'installation électrique (10), et
- une deuxième surface d'accouplement (104) attachable fixement avec le support (12), lesdites première surface d'accouplement (102) et deuxième surface d'accouplement (104) sont jointes par un élément de connexion (108),
dans lequel ladite première surface d'accouplement (102) comprend :
- des éléments de languette (110), s'étendant à partir de ladite première surface d'accouplement (102) à attacher fixement avec une partie d'accouplement (18) dudit boîtier d'installation électrique (10) ;
- au moins un élément de crochet (112), disposé le long d'un bord de ladite première surface d'accouplement (102) à attacher de manière amovible avec ledit boîtier d'installation électrique (10) ;
- un bord de jonction de ladite première surface d'accouplement (102) et dudit élément de connexion (108), configuré pour attacher de façon amovible ledit élément de fixation sur poutre (100) avec le bord correspondant dudit boîtier d'installation électrique (10) ; et
- au moins un élément de blocage de déflexion (116), faisant saillie vers l'extérieur perpendiculaire à la première surface d'accouplement (102) dudit élément de fixation sur poutre (100) et conçu pour être placé en contact avec le support (12) pour supporter ledit boîtier d'installation à l'encontre de forces externes,
et dans lequel ladite deuxième surface d'accouplement (104) comprend des éléments auto-perforants (118) pour fixation dudit boîtier d'installation sur la surface (12), ledit élément auto-perforant (118) étant une tête de flèche profilée pour une pénétration aisée dans le support, dans lequel
l'élément de connexion (108) a une forme en forme de L ayant une première surface (120) à partir de laquelle la deuxième surface d'accouplement (104) s'étend perpendiculairement et une deuxième surface (130) à partir de laquelle la première surface d'accouplement (102) s'étend perpendiculairement, et
moyennant quoi le bord de jonction de ladite première surface d'accouplement (102) et dudit élément de connexion (108) est pourvu d'au moins un trou (106) définissant une partie de relief de vis au niveau du bord de jonction et des trous de montage (126) avec des emboîtements linéaires disposés en son sein à attacher de manière amovible avec le boîtier d'installation électrique (10).

2. Élément de fixation sur poutre (100) pour le montage d'un boîtier d'installation électrique (10) tel que revendiqué dans la revendication 1, dans lequel l'au moins un trou (106) comprend deux trous semi-circulaires, un trou construit au niveau d'un bord de ladite première surface d'accouplement (102) et un autre trou au niveau d'un bord distal de l'élément de connexion (108).

3. Élément de fixation sur poutre (100) pour le montage d'un boîtier d'installation électrique (10) tel que revendiqué dans la revendication 1, dans lequel des côtés d'une forme rectangulaire dudit élément de blocage de déflexion (116) peuvent être variés selon la charge prévue pour être appliquée sur le boîtier d'installation électrique (10).

4. Élément de fixation sur poutre (100) pour le montage d'un boîtier d'installation électrique (10) tel que revendiqué dans l'une quelconque des revendications 1 à 3 ci-dessus, comprenant un unique élément de blocage de déflexion (116) s'étendant à partir de la première surface d'accouplement (102) de l'élément de fixation sur poutre (100) dans une direction parallèle à la deuxième surface d'accouplement (104).

5. Élément de fixation sur poutre (100) pour le montage d'un boîtier d'installation électrique (10) tel que revendiqué dans la revendication 4, comprenant une paire d'éléments de blocage de déflexion (116) de chaque côté de la première surface d'accouplement (102) de l'élément de fixation sur poutre (100) parallèles l'un à l'autre et une surface plane des éléments de blocage de déflexion (116) étant perpendiculaire à la deuxième surface d'accouplement (104).

6. Élément de fixation sur poutre (100) pour le montage d'un boîtier d'installation électrique (10) tel que revendiqué dans l'une quelconque des revendications 1 à 5 ci-dessus, dans lequel la deuxième surface (130) dudit élément de connexion (108) est pourvue de trous de réception d'emboîtement (128) conçus pour être emboîtés avec un emboîtements linéaires (22) d'un élément de support (14) attaché au boîtier d'installation électrique (10).

7. Élément de fixation sur poutre (100) pour le montage d'un boîtier d'installation électrique (10) tel que revendiqué dans l'une quelconque des revendications 1 à 6 ci-dessus, dans lequel lesdits éléments de crochet (112) sont unidirectionnels et configurés pour se fixer de manière coulissante avec ledit boîtier d'installation électrique (10) et aligner de ce fait lesdits éléments de languette (110) avec ladite partie d'accouplement (18) du boîtier d'installation électrique (10).

8. Élément de fixation sur poutre (100) pour le montage d'un boîtier d'installation électrique (10) tel que revendiqué dans la revendication 7, dans lequel lesdits éléments de crochet unidirectionnels (112) sont pourvus de rainures d'installation linéaires (122) dans la surface interne pour montage sur ledit boîtier d'installation (10) avec une fixation coulissante.

9. Élément de fixation sur poutre (100) pour le montage d'un boîtier d'installation électrique (10) tel que revendiqué dans l'une quelconque des revendications 1 à 8 ci-dessus, dans lequel ladite deuxième surface d'accouplement (104) dudit élément de fixation sur poutre (100) est pourvue de reliefs de vis de montage (124) pour accueillir et protéger la zone filetée de fixations mécaniques de dimensions multiples pour une installation sur site.

10. Élément de fixation sur poutre (100) pour le montage d'un boîtier d'installation électrique (10) tel que revendiqué dans la revendication 9, dans lequel les reliefs de vis (124) sont constitués d'au moins deux types de profils, l'un étant un profil circulaire (124-1) et un autre étant un profil linéaire (124-2).
